# EUROPEAN PATENT APPLICATION

(11) **EP 4 439 713 A1**
(43) Date of publication of application: **02.10.2024**
(21) Application number: 22912023.3
(22) Date of filing: 23.12.2022
(51) Int. Cl.: H01M 4/36, H01M 4/525, H01M 4/505, H01M 4/62, H01M 10/052, H01M 4/02

(54) **POSITIVE ELECTRODE ACTIVE MATERIAL, AND POSITIVE ELECTRODE AND LITHIUM SECONDARY BATTERY COMPRISING SAME**

(30) Priority: 24.12.2021 KR 20210187148
(71) Applicant: LG Energy Solution, Ltd., Seoul 07335 (KR)
(72) Inventor: JO, Chi Ho, Daejeon 34122 (KR); JUNG, Wang Mo, Daejeon 34122 (KR); YOO, Tae Gu, Daejeon 34122 (KR); HWANG, Jin Tae, Daejeon 34122 (KR); JUNG, Hae Jung, Daejeon 34122 (KR); HEO, Jong Wook, Daejeon 34122 (KR); CHO, Hyeon Jin, Daejeon 34122 (KR)
(74) Representative: Hoffmann Eitle
(86) International application number: PCT/KR2022/021185
(87) International publication number: WO 2023/121390

(57) **Abstract**

The present invention relates to a positive electrode active material including lithium nickel-based oxide particles in a single-particle form composed of a single nodule or a single-particle-like form, which is a complex of at most 30 nodules; and a coating layer formed on the surface of the lithium nickel-based oxide particles, wherein the coating layer is formed by using a nano-sized coating precursor which is a chelate complex comprising lithium, nickel, cobalt, and M^{a} (where M^{a} is Mn, Al, or a combination thereof).

## Description

### TECHNICAL FIELD

### Cross-reference to Related Applications

This application claims the benefit of Korean Patent Application No. 10-2021-0187148, filed on December 24, 2021, the disclosure of which is incorporated herein in its entirety by reference.

### Technical Field

The present invention relates to a positive electrode active material, a positive electrode including the same, and a lithium secondary battery, and more particularly, to a positive electrode active material in a single-particle or single-particle-like form, a positive electrode including the same, and a lithium secondary battery.

### BACKGROUND ART

A lithium secondary battery generally includes a positive electrode, a negative electrode, a separator, and an electrolyte, and the positive electrode and the negative electrode include an active material capable of intercalation and deintercalation of lithium ions.

Lithium cobalt oxide (LiCoO₂), lithium nickel oxide (LiNiO₂), lithium manganese oxide (LiMnO₂, LiMnO₄, or the like), a lithium iron phosphate compound (LiFePO₄), or the like has been used as a positive electrode active material of the lithium secondary battery. Among these, the lithium cobalt oxide has the advantage of high operating voltage and excellent capacity characteristics, but it is difficult to commercially apply the lithium cobalt oxide to large-capacity batteries due to the high price and unstable supply of cobalt as a raw material. The lithium nickel oxide has poor structural stability, and thus it is difficult to achieve sufficient lifetime characteristics. Meanwhile, the lithium manganese oxide has excellent stability, but has a limitation of poor capacity characteristics. Accordingly, lithium composite transition metal oxides including two or more transition metals have been developed to compensate for limitations of lithium transition metal oxides including Ni, Co, or Mn alone, and among these, lithium nickel cobalt manganese oxides including Ni, Co, and Mn are widely used in electric vehicle batteries.

Conventional lithium metal oxides are generally in the form of spherical secondary particles in which tens to hundreds of primary particles are aggregated. However, with respect to the lithium metal oxides in the form of secondary particles in which many primary particles are aggregated as described above, there is a limitation in that particle breakage, in which the primary particles fall off in a rolling process during preparation of a positive electrode, is easy to occur and cracks occur in the particles during charge and discharge. When the particle breakage or cracks of the positive electrode active material occur, since a contact area with the electrolyte solution increases, gas generation and degradation of the active material due to a side reaction with the electrolyte solution are increased, and as a result, there is a limitation in that lifetime characteristics deteriorated.

In addition, the demand for high-output and highcapacity batteries, such as electric vehicle batteries, has recently increased, and accordingly, the nickel content in the positive electrode active material is gradually increasing. When the nickel content in the positive electrode active material is increased, initial capacity characteristics are improved, but when charging and discharging are repeated, a large amount of Ni⁺⁴ ions having high reactivity are generated, resulting in structural collapse of the positive electrode active material, and as a result, the degradation rate of the positive electrode active material is increased, thereby leading to deterioration in lifetime characteristics and battery safety.

In order to solve the above limitations, a technique for preparing a positive electrode active material in the form of single particles rather than secondary particles by increasing a sintering temperature during the preparation of lithium nickel cobalt manganese oxides has been proposed. The positive electrode active material in the form of single particles has a smaller contact area with the electrolyte than that of a conventional positive electrode active material in the form of secondary particles, and thus has less side reactions with the electrolyte and excellent particle strength such that particle breakage is less during the manufacture of an electrode. Therefore, when the positive electrode active material in the form of single particles is applied, there is an advantage that gas generation and lifetime characteristics are excellent. However, in the case of a conventional positive electrode active material in the form of a single particle, since less interface between the primary particles serving as a movement path of lithium ions in the particles reduces the lithium mobility and the positive electrode active material is prepared at a relatively high sintering temperature, a rock-salt phase is formed on the surface of the particle, and thus the surface resistance is high. Therefore, the conventional positive electrode active material in the form of a single particle has limitations of high resistance and low output characteristics.

### DISCLOSURE OF THE INVENTION

### TECHNICAL PROBLEM

An aspect of the present invention provides a positive electrode active material having excellent life characteristics and excellent resistance characteristics and output characteristics by forming a coating layer on the surface of a lithium composite transition metal oxide in a single-particle or single-particle-like form using a nano-sized coating precursor.

In addition, another aspect of the present invention provides a positive electrode and a secondary battery having excellent life characteristics and resistance characteristics by including the above-described positive electrode active material.

### TECHNICAL SOLUTION

According to an aspect of the present invention, there is provided a positive electrode active material including: lithium nickel-based oxide particles in a single-particle form composed of a single nodule or a single-particle-like form, which is a complex of at most 30 nodules; and a coating layer formed on the surface of the lithium nickel-based oxide particles, wherein the coating layer is formed by using a nano-sized coating precursor which is a chelate complex including lithium, nickel, cobalt, and M^{a} (where M^{a} is Mn, Al, or a combination thereof).

According to another aspect of the present invention, there is provided a method for preparing a positive electrode active material, the method including a first step for reacting a coating precursor preparation solution including a chelating agent and a metal solution containing lithium, nickel, cobalt, and M^{a} (where M^{a} is Mn, Al, or a combination thereof) to prepare a nano-sized coating precursor; and a second step for dry-mixing the coating precursor and a lithium nickel-based oxide particles in a single-particle form composed of a single nodule or a single-particle-like form, which is a complex of at most 30 nodules, and then sintering the mixture to form a coating layer.

According to still another aspect of the present invention, there is provided a positive electrode including the positive electrode active material according to the present invention, and a lithium secondary battery.

### ADVANTAGEOUS EFFECTS

The positive electrode active material according to the present invention includes single-particle or single-particle-like shaped lithium nickel-based oxide particles having excellent particle strength, and thus less particle breakage or cracks by rolling during the preparation of the electrode are caused, thereby reducing the gas generation and the deterioration of the positive electrode active material due to the side reactions with an electrolyte, so that excellent life characteristics and high-temperature characteristics can be achieved.

In addition, a positive electrode active material according to the present invention can form a coating layer by using a nano-sized coating precursor synthesized by a polyol process such that the coating layer can be uniformly and thinly formed to have nano-thickness on the surface of lithium nickel-based oxide particles. When the uniform and thin coating layer is formed as described above, the contact area with the electrolyte is reduced, and the exposure of Ni⁺⁴ ions having high reactivity to the surface of the positive electrode active material can be minimized, thereby improving the structural stability of the positive electrode active material.

In addition, the coating layer according to the present invention has a thin nano-scale thickness, and a layered lithium transition metal oxide composition, and includes a relatively high content of cobalt having excellent output and resistance characteristics. Accordingly, there is an effect of improving resistance and output characteristics by facilitating intercalation and deintercalation of lithium on the surface of the positive electrode active material.

### BRIEF DESCRIPTION OF THE DRAWINGS

FIG. 1 is a graph showing resistance characteristics of secondary batteries to which the positive electrode active materials prepared according to Example and Comparative Example are applied.
FIG. 2 is a graph showing life characteristics of secondary batteries to which the positive electrode active materials prepared according to Example and Comparative Example are applied.

### BEST MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

As used herein, the term "single particle" refers to a particle composed of a single nodule.

The "nodule" refers to a sub-particle unit constituting a single particle or a pseudo-single particle, and may be a single crystal having no grain boundaries or a polycrystal having no grain boundaries in appearance when observed in the view at a magnification of 5,000 to 20,000 using a scanning electron microscope.

The "pseudo-single particle" refers to a complex formed by aggregating 30 or less, preferably 2 to 30 nodules.

As used herein, the term "secondary particle" refers to a particle formed by aggregation of tens to hundreds of primary particles. Specifically, the secondary particle is an aggregate of at least 50 primary particles. As used herein, the "particle" is a concept including any one or all among a single particle, a pseudo-single particle, a primary particle, a nodule, and a secondary particle.

As used herein, the term "average particle diameter D₅₀" refers to a particle size based on 50% of the volume cumulative particle size distribution of the powder to be measured (e.g., a coating precursor or positive electrode active material powder). The average particle diameter D₅₀ may be measured using a laser diffraction method. For example, the powder to be measured may be dispersed in a dispersion medium, then introduced into a commercially available laser diffraction particle size measuring apparatus (e.g., Microtrac MT 3000), irradiated with an ultrasonic wave of about 28 kHz at a 60-W output. Then, after a volume cumulative particle size distribution graph may be obtained, a particle size corresponding to 50% of the volume cumulative amount may be determined to measure the average particle diameter D₅₀.

As used herein, the term "crystallite" refers to a particle unit having substantially the same crystal orientation and may be identified by Electron Backscatter Diffraction (EBSD) analysis. Specifically, it is a minimum particle unit represented by the same color in an IPF map obtained by EBSD analysis of a cross section of a positive electrode active material cut through ion milling.

Meanwhile, as used herein, the term "average crystallite size" may be quantitatively analyzed by using X-ray diffraction analysis (XRD) with Cu-Kα X-rays. Specifically, particles to be measured is put in a holder and a diffraction grating created by irradiating the particles with X-ray is analyzed so that the average crystal size of the crystalline grains may be quantitatively analyzed. Sampling is prepared by putting a powder sample of the particles to be measured in a groove in the middle of a holder for general powder, using a slide glass to make the surface level, and making the sample height equal to the edge of the holder. Then, X-ray diffraction analysis is performed using a Bruker D8 endeavor (light source: Cu Kα, λ=1.54 Å) equipped with a LynxEye XE-T position sensitive detector under the conditions of step size=0.02° with respect to the region of FDS 0.5°and 2θ=15° to 90°, and the total scan time of about 20 minutes. The Rietveld refinement is performed with respect to the measured data in consideration of the charges (metal ions having +3 at a transition metal site and Ni ions having +2 at a Li site) at each site and cation mixing. In the crystalline grain size analysis, instrumental broadening is considered using Fundamental Parameter Approach (FPA), which is implemented in Bruker TOPAS program, and all peaks in the measurement range at fitting are used. Among the peak types available in TOPAS, a peak shape is fitted using only Lorenzian contribution as a first principal (FP), and in this case, strain is not considered.

As used herein, the term "specific surface area" is measured by a Brunauer-Emmett-Teller (BET) method, and specifically, may be calculated from the amount of nitrogen gas adsorbed at a liquid nitrogen temperature (77K) using BELSORP-mino II made by BEL Japan, Inc.

### Positive Electrode Active Material

Hereinafter, the positive electrode active material according to the present invention will be described.

The positive electrode active material according to the present invention includes (1) lithium nickel-based oxide particles in a single-particle or single-particle-like form, and (2) a coating layer formed on the surface of the lithium nickel-based oxide particles.

### (1) Lithium Nickel-Based Oxide Particles

The lithium nickel-based oxide particle is a single particle composed of a single nodule or a pseudo-single particle which is a complex of at most 30 nodules, preferably 2-30 nodules, and more preferably, 2-20 nodules.

Since the lithium nickel-based oxide particles in a single particle or single-particle-like form have higher particle strength than the conventional lithium nickel-based oxide in the form of secondary particles in which tens to hundreds of primary particles are aggregated, there is less particle breakage during rolling.

In addition, the lithium nickel-based oxide in a single-particle or single-particle-like form according to the present invention has less number of nodules constituting the particles, thereby reducing changes due to volume expansion and contraction of the nodules during charging and discharging, and thus significantly reducing cracks within the particles.

Meanwhile, the lithium nickel-based oxide particles may have a composition in which the nickel content among all metals excluding lithium is 70 mol% or more, preferably 80 mol% or more, and more preferably 82 mol% or more, and specifically, may be a lithium nickel cobalt manganese-based oxide in which the nickel content among all metals excluding lithium is 70 mol% or more, preferably 80 mol% or more, and more preferably 82 mol% or more. When the nickel content in the lithium nickel-based oxide particles satisfies the above range, a high energy density can be achieved.

More specifically, the lithium nickel-based oxide particles may have composition represented by [Formula 1] below:

[Formula 1] LiₐNi_{b}Co_{c}M¹_{d}M²ₑO₂

In Formula 1 above, M¹ may be Mn, Al, or a combination thereof, and preferably, Mn or Mn and Al.

M² above may be at least one selected from the group consisting of Zr, W, Y, Ba, Ca, Ti, Mg, Ta, and Nb, preferably at least one selected from the group consisting of Zr, Y, Mg, and Ti, and more preferably Zr, Y, or a combination thereof. The M¹ element is not necessarily included, but when included in an appropriate amount, the M¹ element may serve to promote particle growth during the sintering or improve the crystal structure stability.
a above denotes a molar ratio of lithium in the lithium nickel-based oxide, and may satisfy 0.8≤a≤1.2, 0.85≤a≤1.15, or 0.9≤a≤1.2. When the molar ratio of lithium satisfies the above range, the crystal structure of the lithium nickel-based oxide may be stably formed.
b above denotes a molar ratio of nickel among all metals excluding lithium in the lithium nickel-based oxide, and may satisfy 0.7≤b<1, 0.8≤b<1, or 0.82≤b<1. When the molar ratio of nickel satisfies the above range, high energy density may be exhibited and high capacity may be achieved.
c above denotes a molar ratio of cobalt among all metals excluding lithium in the lithium nickel-based oxide, and may satisfy 0<c<0.3, 0<c<0.2, or 0.01≤c≤0.15. When the molar ratio of cobalt satisfies the above range, good resistance characteristics and output characteristics may be achieved.
d above denotes a molar ratio of the M¹ element among all metals excluding lithium in the lithium nickel-based oxide, and may satisfy 0<d<0.3, 0<d<0.2, or 0.01≤d≤0.15. When the molar ratio of the M¹ element satisfies the above range, the positive electrode active material exhibits excellent structural stability.
e above denotes a molar ratio of the M² element among all metals excluding lithium in the lithium nickel-based oxide, and may satisfy 0≤e≤0.1 or 0≤e≤0.05.

### (2) Coating Layer

The positive electrode active material according to the present invention includes a coating layer on the surface of the lithium nickel-based oxide particles in a single-particle or single-particle-like form as described above.

The coating layer may be formed using a nano-sized coating precursor, wherein the nano-sized coating precursor may be a chelate complex including lithium, nickel, cobalt, and M^{a} (where M^{a} is Mn, Al, or a combination thereof), specifically, a chelate complex including lithium, nickel, cobalt, and M^{a} (where M^{a} is Mn, Al, or a combination thereof) synthesized through a polyol process, and more specifically, a chelate complex including lithium, nickel, cobalt, and manganese. A method for synthesizing the coating precursor will be described in detail in the method for preparing a positive electrode active material.

In the case of a high-nickel positive electrode active material having a high nickel content, there is a limitation in that elution of a transition metal and a structural collapse occur due to a side reaction with an electrolyte on the surface of the positive electrode active material in which the positive electrode active material is brought into contact with the electrolyte. Conventionally, in order to solve such a limitation, a method for reducing contact with an electrolyte solution by coating boron or an oxide of a metal such as Al on the surface of a high-nickel positive electrode active material has been used. However, since such a coating layer is not electrically active, when the coating layer is formed on the surface of the active material, there is a limitation in that as the resistance of the positive electrode active material increases and the thickness of the coating layer increases, the resistance more increases. In particular, in the case of a single-particle positive electrode active material, since the resistance is basically high, when a conventional coating layer is applied to the surface of the single-particle positive electrode active material, the limitation of output degradation due to an increase in resistance occurs more seriously.

However, according to the studies of the present inventors, it has been found that when coating is performed using a chelate complex including lithium, nickel, cobalt, and M^{a} (where M^{a} is Mn, Al, or a combination thereof) synthesized through a polyol process as a coating precursor, it is possible to improve resistance characteristics of the positive electrode active material while effectively suppressing a side reaction with the electrolyte. It is thought that this is because the chelate complex synthesized through the polyol process has a very small particle diameter at a nanometer level, and thus when coating is performed using chelate complex, a nanometer-level thin coating layer is uniformly formed on the entire surface of lithium nickel-based oxide particles to block the electrolyte solution from being contact with a core part having a high nickel content, and the metal elements included in the chelate complex form a layered coating layer in which lithium is easily intercalated and deintercalated after sintering, thereby increasing lithium mobility.

The coating precursor used in the present invention may have an average particle diameter (D₅₀) of 1-500 nm. The average particle diameter of the coating precursor may be preferably 5-300 nm, and more preferably 10-150 nm. When the average particle diameter of the coating precursor is within the above range, a thin and uniform coating layer may be formed.

Meanwhile, the coating layer formed using the coating precursor as described above may have a composition of a layered lithium nickel cobalt-based oxide, and in this case, the lithium nickel cobalt-based oxide preferably has a nickel content less than that of the lithium nickel-based oxide particles described above. This is because when the nickel content of the coating layer is high, a large amount of Ni⁺⁴ ions having high reactivity are generated on the surface, thereby deteriorating the structural stability of the positive electrode active material. Preferably, the nickel content among all metals excluding lithium in the coating layer may be 60 mol% or less.

Specifically, the coating layer may have a composition represented by Formula 2 below:

[Formula 2] LiₓNi_{y}Co_{z}M^{a}_{w}M^{b}ₚO_{2-q}

In Formula 2 above, M^{a} may be Mn, Al, or a combination thereof, and preferably, Mn or Mn and Al.

M^{b} may be at least one selected from the group consisting of Zr, W, Y, Ba, Ca, Ti, Mg, Ta, and Nb, and preferably at least one selected from the group consisting of Al, Zr, Y, Mg, and Ti.

0.5≤x≤1.05, 0<y≤0.6, 0<z<0.4, 0<w<0.4, 0≤p≤0.2, and 0≤q≤0.5.

x above denotes a molar ratio of lithium in the coating layer, and may satisfy 0.5≤x≤1.05, 0.6≤x≤1.05, or 0.6≤x≤1.0.

y above denotes a molar ratio of nickel among all metals excluding lithium in the coating layer, and may satisfy 0<y≤0.6, 0.1≤y≤0.6, or 0.3≤y≤0.6.

z above denotes a molar ratio of cobalt among all metals excluding lithium in the coating layer, and may satisfy 0<z<0.4, 0.05≤z<0.4, or 0.1≤z<0.4.

w above denotes a molar ratio of the M^{a} element among all metals excluding lithium in the coating layer, and may satisfy 0<w<0.4, 0.05≤w<0.4, or 0.1≤w<0.4.

p above denotes a molar ratio of the M^{b} element among all metals excluding lithium in the coating layer, and may satisfy 0≤p≤0.2, 0≤p≤0.1, or 0≤p≤0.05.

2-q denotes a molar ratio of oxygen in the coating layer, and may satisfy 0≤q≤0.5 or 0≤q≤0.4.

When the coating layer has a composition represented by Formula 2 above, resistance characteristics and life characteristics are more excellent.

Meanwhile, the coating layer may have a thickness of 1-500 nm. The thickness of the coating layer may be preferably 10-200 nm, and more preferably 20-50 nm. When the thickness of the coating layer is within the above range, the coating layer may not act as a resistor, and the uniformity of the surface coating may be excellent.

Meanwhile, a nodule of the positive electrode active material according to the present invention may have an average particle diameter of 0.5-3 µm, preferably 0.8-2.5 µm, and more preferably 0.8-1.5 µm. When the average particle diameter of the nodule satisfies the above range, a positive electrode active material in a single-particle or single-particle-like form having excellent electrochemical properties may be formed. If the average particle diameter of the nodules is too small, the number of aggregations of the nodules that form lithium nickel-based oxide particles increases, thereby reducing the effect of suppressing the generation of particle breakage during rolling, and if the average particle diameter of the nodules is too large, the lithium diffusion path inside the nodule is lengthened, thereby increasing resistance and reducing output characteristics.

In addition, the positive electrode active material may have an average particle diameter D₅₀ of 2 µm to 6 µm, preferably 2 µm to 5 µm, and more preferably 3 µm to 5 µm. There are limitations that when the D₅₀ of the positive electrode active material is too small, the specific surface area of the active material is increased, and thus the increase of the conductive agent is required, so that the electrode density decreases, the solid content of the electrode slurry decreases, thereby reducing the productivity when preparing the electrode, and the electrolyte solution wetting deteriorates, thereby reducing the electrochemical properties, and when the D₅₀ is too large, the resistance increases, and the output characteristics deteriorates.

In addition, the positive electrode active material may have an average crystallite size of 150-300 nm, 200-280 nm, or 230-280 nm. When the average crystallite size satisfies the above range, the generation of a rock-salt phase may be reduced when the lithium nickel-based oxide is prepared, and thus the positive electrode active material in the form of single particles or pseudo-single particles having excellent resistance characteristics may be prepared. Generally, the positive electrode active material in the form of single particles or pseudo-single particles is prepared by a method for increasing the size of nodules by elevating the sintering temperature, and there is a limitation in that when the size of the nodules only increases while the size of the crystal is small, a rock-salt phase is formed on the surface of the nodules, thereby increasing resistance. However, when the average crystallite size and the average particle diameter of nodules increase together, the formation of a rock-salt phase is minimized to thus obtain an effect of suppressing an increase in resistance.

As described above, when the secondary battery is manufactured by applying the positive electrode active material of the present invention including the coating layer formed by using the nano-sized coating precursor on the surface of the lithium nickel-based oxide particles in a single-particle or single-particle-like form, excellent life characteristics, resistance characteristics, and output characteristics may all be achieved.

### Method for Preparing Positive Electrode Active Material

Next, a method for preparing a positive electrode active material according to the present invention will be described.

A method for preparing a positive electrode active material according to the present invention includes (1) a first step for reacting a coating precursor preparation solution including a chelating agent and a metal solution containing lithium, nickel, cobalt, and M^{a} (where M^{a} is Mn, Al, or a combination thereof) to prepare a nano-sized coating precursor; and (2) a second step for dry-mixing the coating precursor and a lithium nickel-based oxide particles in a single-particle form composed of a single nodule or a single-particle-like form, which is a complex of at most 30 nodules, and then sintering the mixture to form a coating layer.

Hereinafter, each step of the present invention will be described in detail.

### (1) First Step

The first step is a step for reacting a coating precursor preparation solution including a chelating agent and a metal solution containing metal ions (i.e., lithium, nickel, cobalt, M^{a}, and optionally M^{b}) included in the coating layer to prepare a coating precursor, which is a complex in which the metal ions are combined with the chelating agent.

The metal solution may be prepared by dissolving a metal-containing material, for example, a nickel-containing raw material, a cobalt-containing raw material, a manganese-containing raw material, an aluminum-containing raw material, a lithium-containing raw material, or the like in a solvent such as water.

In this case, the nickel-containing raw material may be an acetate, a carbonate, a nitrate, a sulfate, a halide, a sulfide, or an oxide of nickel, and the cobalt-containing raw material may be an acetate, a carbonate, a nitrate, a sulfate, a halide, a sulfide, or an oxide of a cobalt metal. In addition, the manganese-containing raw material may be an acetate, a carbonate, a nitrate, a sulfate, a halide, a sulfide, or an oxide of manganese, and the lithium-containing raw material may be an acetate, a carbonate, a nitrate, a sulfate, a halide, a sulfide, or an oxide of lithium.

The nickel-containing raw material may be, for example, Ni(CH₃COO)₂·4H₂O, NiO, NiCO₃·2Ni(OH)₂·4H₂O, NiC₂O₂·2H₂O, Ni(NO₃)₂·6H₂O, NiSO₄, NiSO₄·6H₂O, a nickel halide, or a combination thereof, but is not limited thereto.

The cobalt-containing raw material may be, for example, Co(CH₃COO)₂·4H₂O, CoSO₄, Co(OCOCH₃)₂·4H₂O, Co(NO₃)₂·6H₂O, CoSO₄ ·7H₂O, or a combination thereof, but is not limited thereto.

The manganese-containing raw material may be, for example, Mn(CH₃COO)₂·4H₂O, Mn₂O₃, MnO₂, Mn₃O₄ MnCO₃, Mn(NO₃)₂, MnSO₄, a manganese acetate, a manganese halide, or a combination thereof, but is not limited thereto.

The aluminum-containing raw material may be, for example, Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, an aluminum halide, or a combination thereof.

The lithium-containing raw material may be, for example, a lithium carbonate, a lithium hydroxide (LiOH·H₂O), a lithium hydroxide, a lithium nitrate (LiNO₃), a lithium chloride (LiCl), or a combination thereof, but is not limited thereto.

The metal solution may further contain a M^{b} metal-containing raw material. In this case, the M^{b} metal may be at least one selected from the group consisting of Zr, W, Y, Ba, Ca, Ti, Mg, Ta, and Nb. In this case, the M^{b} metal-containing raw material may be an acetate, a carbonate, a nitrate, a sulfate, a halide, a sulfide, or an oxide of the M^{b} metal.

Meanwhile, the content of a nickel-containing raw material, a cobalt-containing raw material, a manganese-containing raw material, an aluminum-containing raw material, a lithium-containing raw material, an M^{b} metal-containing raw material, or the like, which may be included in the metal solution, may be appropriately adjusted in consideration of a composition of the coating layer to be prepared.

The chelating agent may be a Lewis acid compound including at least one selected from the group consisting of a carboxylic acid group and a nitrogen element. In the case of the carboxylic acid group, the anion of the carboxylate formed by oxidizing the carboxylic acid group in the coating precursor preparation solution may form a complex with the metal ion, and in the case of the nitrogen element, an unshared electron pair of the nitrogen element may form a complex with the metal ion.

The chelating agent may be preferably at least one selected from the group consisting of citric acid, polyvinylpyrrolidone, and glycolic acid, and more preferably citric acid and/or polyvinylpyrrolidone. In this case, it may be easy to form a complex with the metal ion.

The coating precursor preparation solution may be prepared by adding, to a solvent, the chelating agent and the metal solution containing ions included in the coating layer, followed by mixing. The solvent of the coating precursor preparation solution may be at least one selected from the group consisting of ethylene glycol, diethylene glycol, triethylene glycol, 1,2-propylene glycol, 1,3-propylene glycol, 1,2-butanediol, 1,3-butanediol, 1,4-butanediol, and 2,3-butanediol. The solvent of the coating precursor preparation solution may preferably be diethylene glycol and/or triethylene glycol.

When a coating precursor preparation solution including the metal ion-containing metal solution and the chelating agent is prepared, the coating precursor preparation solution is reacted under reflux at a high temperature to obtain a solution including a complex formed by the coordination bond of the metal ion with the chelating agent. Then, the solution including the complex is washed with ethanol using a centrifuge, only the complex is separated, and the separated complex is dried to obtain a coating precursor.

The reaction of the first step may be performed at 200-300 °C, and preferably 200-250 °C. Specifically, the coating precursor preparation solution may be reacted under reflux at 200-300 °C, and preferably, 200-250 °C for 1-5 hours. When the reaction is performed at a temperature within the above range, the complex may be easily formed.

Meanwhile, when the metal solution includes Ni, Co, Mn, Li ions, and the like, the coating precursor preparation solution including the metal solution and the chelating agent is reacted, so that the Ni and Co ions are reduced and aggregated to form a cluster, and the Mn and Li ions are present around the cluster. Accordingly, after the reaction is terminated, the product is washed using a centrifuge and then dried to obtain a coating precursor in which Ni and Co are present in the core part and Mn, Li, and the chelating agent are bonded and present in the upper part of the core part.

The coating precursor prepared as described above may have an average particle diameter (D₅₀) of 1-500 nm. The average particle diameter of the coating precursor may be preferably 5-300 nm, and more preferably 10-150 nm. When the average particle diameter of the coating precursor is within the above range, the uniformity of the surface coating may be excellent.

### (2) Second Step

The second step is a step of dry-mixing the coating precursor prepared in the first step with lithium nickel-based oxide particles in a single-particle or single-particle-like form and then sintering the mixture to form a coating layer on the surface of the particles.

According to the preparation method of the present invention, the coating precursor, which is a chelating complex in which a chelating agent is combined with metal ions, is used such that the coating layer can be uniformly formed despite a dry coating.

Specifically, according to the preparation method of the present invention, the surface of the lithium nickel-based oxide particles may be completely surrounded by the coating layer. That is, the surface of the particles may be formed in order not to be exposed to the outside.

In the second step, the sintering may be performed at 800-900 °C. The sintering may be performed for 5-15 hours. In this case, the diffusion between the particles may be improved to form a uniform coating layer.

Specifically, the sintering may be performed by elevating the temperature from 800 °C to 900 °C at a rate of 5-10 °C/minute. The sintering may be performed for 5-15 hours. When the temperature is elevated at once up to the sintering temperature while maintaining the rate of elevating temperature, the coating precursor is independently sintered so that independent particles are not formed, and the coating layer may be uniformly formed on the surface of the lithium nickel-based oxide particles.

Through the above-described method, the coating layer having a specific composition is uniformly formed despite a dry-coating, and thus a positive electrode active material having improved structural stability can be prepared.

### Positive Electrode

Next, a positive electrode according to the present invention will be described.

The positive electrode according to the present invention includes a positive electrode active material layer including the positive electrode active material according to the present invention. Specifically, the positive electrode includes a positive electrode current collector and a positive electrode active material layer which is formed on the positive electrode current collector and includes the positive electrode active material.

In the positive electrode, the positive electrode current collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode current collector may typically have a thickness of 3 um to 500 µm, and microscopic irregularities may be formed on the surface of the collector to improve the adhesion of the positive electrode active material. The positive electrode current collector, for example, may be used in various shapes such as a film, a sheet, a foil, a net, a porous body, a foam body, and a non-woven fabric body.

Also, the positive electrode active material layer may include a conductive agent and a binder in addition to the above-described positive electrode active material.

The conductive agent is used to provide conductivity to the electrode, wherein any conductive agent may be used without particular limitation as long as it has suitable electron conductivity without causing adverse chemical changes in the battery. Specific examples of the conductive agent may include graphite such as natural graphite or artificial graphite; carbon based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one alone thereof or a mixture of two or more thereof may be used. The conductive agent may be typically included in an amount of 1 wt% to 30 wt%, preferably 1 wt% to 20 wt%, and more preferably 1 wt% to 10 wt% with respect to the total weight of the positive electrode active material layer.

The binder serves to improve the adhesion between the positive electrode active material particles and the adhesion between the positive electrode active material and the positive electrode current collector. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one alone thereof or a mixture of two or more thereof may be used. The binder may be included in an amount of 1 wt% to 30 wt%, preferably 1 wt% to 20 wt%, and more preferably 1 wt% to 10 wt% with respect to the total weight of the positive electrode active material layer.

The positive electrode may be prepared according to a typical method of preparing a positive electrode. For example, the positive electrode may be prepared by mixing a positive electrode active material, a binder, and/or a conductive agent in a solvent to prepare a positive electrode slurry, coating the positive electrode slurry on a positive electrode current collector, and then drying and rolling the coated positive electrode current collector.

The solvent may be a solvent normally used in the art. The solvent may include dimethyl sulfoxide (DMSO), isopropyl alcohol, N-methylpyrrolidone (NMP), acetone, or water, and any one alone thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Alternatively, the positive electrode may be prepared by casting the positive electrode slurry on a separate support and then laminating a film separated from the support on the positive electrode current collector.

### Lithium Secondary Battery

Next, a lithium secondary battery according to the present invention will be described.

The lithium secondary battery of the present invention includes the positive electrode according to the present invention. Specifically, the lithium secondary battery includes a positive electrode, a negative electrode disposed to face the positive electrode, a separator interposed between the positive electrode and the negative electrode, and an electrolyte, wherein the positive electrode is as described above. Also, the lithium secondary battery may further selectively include a battery container accommodating an electrode assembly of the positive electrode, the negative electrode, and the separator, and a sealing member for sealing the battery container.

In the lithium secondary battery, the negative electrode includes a negative electrode current collector and a negative electrode active material layer disposed on the negative electrode current collector.

The negative electrode current collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode current collector may typically have a thickness of 3 um to 500 µm, and, similar to the positive electrode current collector, microscopic irregularities may be formed on the surface of the collector to improve the adhesion of the negative electrode active material. The negative electrode current collector, for example, may be used in various shapes such as a film, a sheet, a foil, a net, a porous body, a foam body, and a non-woven fabric body.

The negative electrode active material layer selectively includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used.

Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The conductive agent is used to provide conductivity to the electrode, wherein any conductive agent may be used without particular limitation as long as it has suitable electron conductivity without causing adverse chemical changes in the battery. Specific examples of the conductive agent may include graphite such as natural graphite or artificial graphite; carbon based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one alone thereof or a mixture of two or more thereof may be used. The conductive agent may be typically included in an amount of 1 wt% to 30 wt%, preferably 1 wt% to 20 wt%, and more preferably 1 wt% to 10 wt% with respect to the total weight of the negative electrode active material layer.

The binder serves to improve the adhesion between the negative electrode active material particles and the adhesion between the negative electrode active material and the negative electrode current collector. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one alone thereof or a mixture of two or more thereof may be used. The binder may be included in an amount of 1 wt% to 30 wt%, preferably 1 wt% to 20 wt%, and more preferably 1 wt% to 10 wt% with respect to the total weight of the negative electrode active material layer.

The negative electrode active material layer may be prepared by, for example, coating, on a negative electrode current collector, a negative electrode slurry containing a negative electrode active material, and optionally a binder and a conductive agent and drying the coated negative electrode current collector, or by casting the negative electrode slurry on a separate support and then laminating a film separated from the support on the negative electrode current collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an esterbased solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a doublebond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a lowviscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used as the lithium salt. It is preferable to use the lithium salt in a concentration range of 0.1 M to 5.0 M, preferably, 0.1 M to 3.0 M. When the concentration of the lithium salt is included within the above range, the electrolyte may have suitable conductivity and viscosity, thereby exhibiting excellent performance, and lithium ions may effectively move.

In order to improve lifetime characteristics of the battery, suppress the reduction in battery capacity, and improve discharge capacity of the battery, additives may be additionally included in the electrolyte in addition to the above electrolyte components. For example, any one alone or a mixture of a haloalkylene carbonate-based compound such as difluoro ethylenecarbonate, pyridine, triethylphosphite, triethanolamine, cyclic ether, ethylene diamine, n-glyme, hexamethylphosphoric acid triamide, nitrobenzene derivatives, sulfur, quinone imine dye, N-substituted oxazolidinone, N,N-substituted imidazolidine, ethylene glycol dialkyl ether, an ammonium salt, pyrrole, 2-methoxy ethanol, or aluminum trichloride may be used as the additive, but the embodiment of the present invention is not limited thereto. The additive may be included in an amount of 0.1 wt% to 10 wt%, preferably, 0.1 wt% to 5 wt% with respect to the total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

### MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example

### <Preparation of Coating Precursor>

A transition metal acetate aqueous solution in which 0.012 mol of Ni(CH₃COO)₂·4H₂O, 0.006 mol of Co(CH₃COO)₂·4H₂O, and 0.012 mol of Mn(CH₃COO)₂·4H₂O were mixed, 0.0345 mol of LiOH·H₂O, and 0.045 mol of citric acid as a chelating agent were added to 80 mL of triethyleneglycol as a solvent, mixed, and then reacted under reflux at 230 °C for 3 hours to obtain a solution including a complex in which Ni, Co, Mn, and Li were combined with the chelating agent. The solution containing the complex was washed with ethanol using a centrifuge, only the complex was separated, and then dried at 80 °C to obtain a coating precursor having an average particle diameter (D₅₀) of 100 nm.

### <Preparation of Lithium Nickel-based Oxide>

After 4 L of distilled water was added to the co-precipitation reactor (20 L of capacity), 100 mL of an aqueous ammonia solution with a concentration of 28 wt% was added thereto while maintaining the temperature at 50 °C. Then, a transition metal solution in which NiSO₄, CoSO₄, and MnSO₄ were mixed so that the molar ratio of nickel, cobalt, and manganese became 87:5:8, an aqueous ammonia solution, and a sodium hydroxide solution were added to the co-precipitation reactor, and the co-precipitation reaction was performed to form a precursor. The precursor particles were separated, washed, and then dried in an oven at 130 °C to prepare a precursor.

The precursor synthesized by the co-precipitation reaction, LiOH, and an aluminum hydroxide were mixed so that the molar ratio of Ni+Co+Mn, Al and Li became 99:1:1.05, and the mixture was heat-treated in an oxygen atmosphere at 850 °C for 12 hours to prepare Li[Ni_{0.86}Co_{0.05}Mn_{0.08}Al_{0.01}]O₂. The prepared lithium nickel-based oxide was in a single-particle and/or single-particle-like form, and the average particle diameter of the primary particles was 2.1 µm, the average particle diameter of the secondary particles was 4.13 um, and the average crystallite size was 280 nm.

The prepared lithium nickel-based oxide in a single-particle form and the coating precursor were dry-mixed, the temperature was elevated at a rate of elevating temperature of 5 ° C/min from 25 °C to 850 °C, and the mixture was sintered at 850 °C for 10 hours, thereby preparing a positive electrode active material in which a coating layer having a composition of LiNi_{0.4}Co_{0.2}Mn_{0.4} was formed on the surface of the single-particle lithium nickel-based oxide particles.

The Ni distribution on the surface of the prepared positive electrode active material was analyzed with TEM-EDS (JEOL, Ltd.), and the thickness to the point where the Ni concentration was changed was measured as the thickness of the coating layer. The measured thickness of the coating layer was about 40 nm.

### Comparative Example

The lithium-nickel-based oxide prepared in Example 1, in which a coating layer was not formed, was prepared as a positive electrode active material.

### <Manufacture of Secondary Battery>

A positive electrode slurry was prepared by mixing each of the positive electrode active materials, which are prepared in Example and Comparative Example, a conductive agent (Super P), and a PVDF binder in a weight ratio of 95:2:3 in N-methylpyrrolidone. The positive electrode slurry was coated on one surface of an aluminum current collector, dried at 130 °C, and then rolled to prepare a positive electrode.

A negative electrode slurry was prepared by mixing graphite as a negative electrode active material, Super C as a conductive agent, and SBR/CMC as a binder in a weight ratio of 95.5:2:2.5, coated on one surface of a copper current collector, dried at 130 °C, and then rolled to prepare a negative electrode.

After an electrode assembly was prepared by interposing a separator between the positive electrode and the negative electrode, a lithium secondary battery was manufactured by disposing the electrode assembly in a battery case and then injecting an electrolyte solution into the case. The electrolyte solution was prepared by dissolving 1 M LiPF₆ in a mixed organic solvent in which ethylene carbonate/dimethyl carbonate/diethyl carbonate were mixed in a volume ratio of 1:2:1, and adding 2 wt% of vinylene carbonate (VC).

### Experimental Example 1 - Resistance Measurement Results

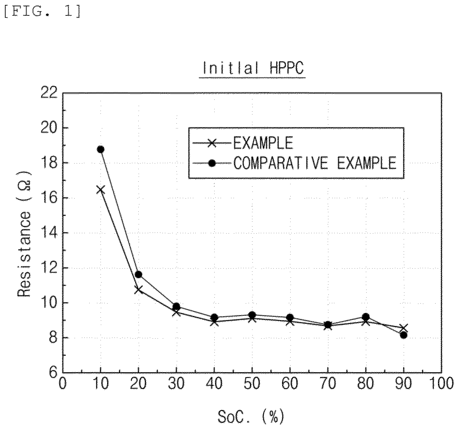

For each of the lithium secondary batteries as manufactured above, charging/discharging were performed at 0.2 C/0.2 C once, each SOC state was set at 0.2 C, and then current was applied at 2.5 C for 10 seconds. Resistance was measured through a voltage change according to the application of current at 2.5 C. Measurement results are shown in FIG. 1.

As shown in FIG. 1, the lithium secondary battery to which the positive electrode active material of Example in which the coating layer is formed according to the method of the present invention is applied exhibits superior resistance characteristics, particularly resistance characteristics at the discharging end compared to the lithium secondary battery to which the positive electrode active material of Comparative Example is applied.

### Experimental Example 2 - Life Characteristic Measurement Results

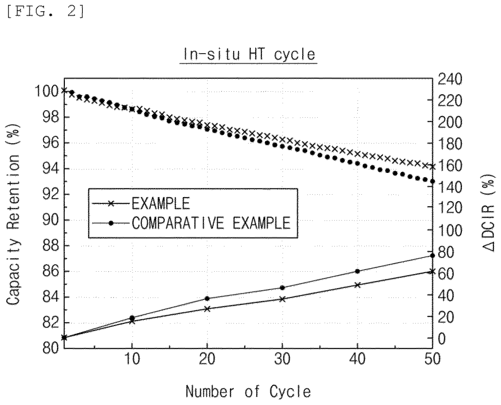

Each of the Lithium Secondary batteries as manufactured above was charged at 45 °C under a CC-CV mode at 1 C until it reached 4.25 V and discharged at a constant current of 0.5 C until it reached 2.5 V, which was set as one cycle. After 50 cycles of charging and discharging was performed, the life characteristics were evaluated by measuring capacity retention. Measurement results are shown in FIG. 2.

As shown in FIG. 2, the lithium secondary battery to which the positive electrode active material of Example in which the coating layer is formed according to the method of the present invention is applied exhibits high-temperature life characteristics superior to the lithium secondary battery to which the positive electrode active material of Comparative Example is applied.

## Claims

1. A positive electrode active material comprising:
lithium nickel-based oxide particles in a single-particle form composed of a single nodule or a single-particle-like form, which is a complex of at most 30 nodules; and
a coating layer formed on the surface of the lithium nickel-based oxide particles,
wherein the coating layer is formed by using a nano-sized coating precursor which is a chelate complex comprising lithium, nickel, cobalt, and M^{a} (where M^{a} is Mn, Al, or a combination thereof).

2. The positive electrode active material of claim 1, wherein the lithium nickel-based oxide particles have a nickel content of 70 mol% or more among all metals excluding lithium.

3. The positive electrode active material of claim 1, wherein the lithium nickel-based oxide particles have a composition represented by Formula 1 below:
[Formula 1] LiₐNi_{b}Co_{c}M¹_{d}M²ₑO₂
wherein, in Formula 1 above, M¹ is Mn, Al, or a combination thereof, M² is Al, Zr, W, Ti, Mg, Ca, Sr, or Ba, 0.8≤a≤1.2, 0.7≤b<1, 0<c<0.3, 0<d<0.3, and 0≤e≤0.2.

4. The positive electrode active material of claim 1, wherein the coating precursor is a chelating complex comprising lithium, nickel, cobalt, and manganese.

5. The positive electrode active material of claim 1, wherein the coating precursor has an average particle diameter (D50) of 1-500 nm.

6. The positive electrode active material of claim 1, wherein the coating layer has a composition represented by Formula 2 below:
[Formula 2] LiₓNi_{y}Co_{z}M^{a}_{w}M^{b}ₚO_{2-q}
wherein, in Formula 2 above, M^{a} is Mn, Al, or a combination thereof, M^{b} is Al, Zr, W, Ti, Mg, Ca, Sr, or Ba, 0.5≤x≤1.05, 0<y≤0.6, 0<z<0.4, 0<w<0.4, 0≤p≤0.2, and 0≤q≤0.5.

7. The positive electrode active material of claim 1, wherein the coating layer has a thickness of 1-500 nm.

8. A method for preparing a positive electrode active material comprising:
a first step for reacting a coating precursor preparation solution including a chelating agent and a metal solution containing lithium, nickel, cobalt, and M^{a} (where M^{a} is Mn, Al, or a combination thereof) to prepare a nano-sized coating precursor; and
a second step for dry-mixing the coating precursor and a lithium nickel-based oxide particles in a single-particle form composed of a single nodule or a single-particle-like form, which is a complex of at most 30 nodules, and then sintering the mixture to form a coating layer.

9. The method of claim 8, wherein the chelating agent is a Lewis acid compound comprising at least one selected from the group consisting of a carboxylic acid group and a nitrogen element.

10. The method of claim 9, wherein the chelating agent is at least one selected from the group consisting of citric acid, polyvinylpyrrolidone, and glycolic acid.

11. The method of claim 8, wherein the coating precursor preparation solution is prepared by adding, to a solvent, the chelating agent and the metal solution containing ions included in the coating layer, followed by mixing.

12. The method of claim 11, wherein the solvent of the coating precursor preparation solution is at least one selected from the group consisting of ethylene glycol, diethylene glycol, triethylene glycol, 1,2-propylene glycol, 1,3-propylene glycol, 1,2-butanediol, 1,3-butanediol, 1,4-butanediol, and 2,3-butanediol.

13. The method of claim 8, wherein the reaction of the first step is performed at 200-300 °C.

14. The method of claim 8, wherein the sintering of the second step is performed at 800-900 °C.

15. The method of claim 14, wherein the sintering is performed by elevating the temperature from 800 °C to 900 °C at a rate of 5-10 °C/minute.

16. A positive electrode for a lithium secondary battery comprising the positive electrode active material of any one of claims 1 to 7.

17. A lithium secondary battery comprising the positive electrode for a lithium secondary battery according to claim 16.
